# EUROPÄISCHE PATENTSCHRIFT

(11) **EP 1 528 968 B1**
(45) Veröffentlichungstag und Bekanntmachung des Hinweises auf die Patenterteilung: **26.12.2007**
(21) Anmeldenummer: 03784108.7
(22) Anmeldetag: 29.07.2003
(51) Int. Cl.: B23K 35/38, B23K 1/005

(54) **PROZESSGAS UND VERFAHREN ZUM LASERSTRAHLHART TEN**
PROCESS GAS AND METHOD FOR LASER HARD SOLDERING
GAZ DE PROCESSUS ET PROCEDE DE BRASAGE LASER

(30) Priorität: 05.08.2002 DE 10235821
(43) Veröffentlichungstag der Anmeldung: 11.05.2005
(73) Patentinhaber: Linde Aktiengesellschaft, 80807 München (DE)
(72) Erfinder: DANZER, Wolfgang, 84405 Dorfen (DE)
(74) Vertreter: Kasseckert, Rainer
(86) Internationale Anmeldenummer: PCT/EP2003/008372
(87) Internationale Veröffentlichungsnummer: WO 2004/014599

(56) Entgegenhaltungen:
- EP-A- 0 527 229
- EP-A- 1 022 087
- WO-A-02/070192
- DE-A- 10 032 975
- US-A- 4 906 812
- P.A.MOSKOWITZ ET AL: "Thermal dry process soldering" JOURNAL OF VACUUM SCIENCE AND TECHNOLOGY: PART A., Bd. 4, Nr. 3, Mai 1986 (1986-05), Seiten 838-840, XP002261977 AMERICAN INSTITUTE OF PHYSICS. NEW YORK., US ISSN: 0734-2101

## Beschreibung

Die Erfindung betrifft ein Prozessgas zum Laserstahlhartlöten sowie ein Verfahren zum Laserstrahlhartlöten mit einem auf eine Lötstelle oder in die Nähe der Lötstelle fokussierten Laserstrahl, wobei das Lot an der Lötstelle von dem Laserstrahl aufgeschmolzen wird.

Das Verfahren des Hartlötens mit Lötprozess im Lötofen ist von allen Lötverfahren das am häufigsten verwendete. In jüngerer Zeit kommt auch das Hartlöten mit Lichtbogen beim Fügen von Bauteilen vermehrt zum Einsatz. Auch das Hartlöten mit Laserstrahl findet zunehmend Interesse, obwohl bei der Durchführung von diesem Verfahren noch viele Probleme zu überwinden sind. Während beim Hartlöten im Lötofen das Lot durch die Wärmezufuhr im Ofen aufschmilzt, verflüssigt es sich beim Löten mit Lichtbogen oder Laserstrahl an der Stelle des Energieeintrags.

Hartlöten und Schweißen weisen auf den ersten Blick viele Ähnlichkeiten miteinander auf, jedoch unterscheiden sich Hartlöten und Schweißen fundamental: Beim Hartlöten wird, im Gegensatz zum Schweißen, der Grundwerkstoff nicht aufgeschmolzen. Lediglich das als Lot zusätzlich zugegebene Material schmilzt durch die Energieeinbringung. Durch Wechselwirkung des geschmolzenen Lots mit dem Grundwerkstoff entsteht die Verbindung. Die Schmelztemperatur des Lots liegt folglich beim Hartlöten immer unterhalb der Schmelztemperatur der zu fügenden Bauteile; jedoch liegt die Solidustemperatur des Lots beim Hartlöten deutlich über der Verflüssigungstemperatur eines Lots, welches zum Weichlöten benutzt wird. Aufgrund der im Vergleich zum Schweißen niedrigeren Temperatur beim Löten werden die Bauteile beim Löten geringer beeinflusst als beim Schweißen. Des Weiteren ermöglicht das Löten auch das Fügen von Materialien mit unterschiedlichen Wärmeleitungskoeffizienten und unterschiedlicher Wärmekapazität, da beim Löten nur das Lot, nicht jedoch der Grundwerkstoff aufgeschmolzen wird. Dagegen ist das Schweißen von Bauteilen aus unterschiedlichen Materialien äußerst problematisch, da diese Eigenschaften beim Aufschmelzen der Werkstoffe eine entscheidende Rolle spielen. Aufgrund der Unterschiede ergeben sich folglich beim Löten und beim Schweißen völlig unterschiedliche Anforderungen an die technische Ausführung.

Laserstrahlhartlöten und Lichtbogenlöten wiederum unterscheiden sich durch die Energieeinbring ung und zeigen eine unterschiedliche Problematik. Beim Lichtbogenlöten wird im Vergleich zum Laserlöten die Energie großflächig eingebracht und der Stabilität des Lichtbogens kommt eine hohe Bedeutung zu. Demgegenüber zeigt das Löten mit einem Laserstrahl als Energiequelle die Vorteile der Lasertechnik. So ist die Energieeinbringung mit dem Laserstrahl örtlich sehr stark begrenzt und das Lot erstarrt nach dem Lötprozess sehr rasch. Dadurch wird der durch das Erwärmen des Bauteils entstehende Verzug minimiert und auch das Fügen von stark wärmeempfindlichen Materialien ist möglich. Laserfertigungs methoden sind mit hohen Investitionskosten verbunden und werden vor allem bei automatisierten Vorgängen in der Fertigung eingesetzt.

Beim Laserschweißen ist die Verwendung von Prozessgasen bekannt. Die Prozess gase dienen dazu, das beim Schweißen durch Verdampfen und Ionisieren des Grundwerkstoffs entstehende Plasma zu kontrollieren und eine Abschirmung des Laserstrahls durch die Plasmawolke zu verhindern. Weiterhin ist es bekannt, den Prozessgasen aktive Gase als Bestandteil zu zumischen. Die aktiven Gase bewirken eine effektive Plasmakontrolle, erhöhen die Schweißgeschwindigkeit und verbessern die Qualität.

Beim Lötvorgang wird normalerweise ein Flussmittel eingesetzt, welches in der Regel vor dem Lötprozess als Lötpaste aufgebracht wird. Das Flussmittel wirkt auf die Ob erfläche des Bauteils ein, reinigt diese und bereitet die Wechselwirkung mit dem Lot vor. Das Flussmittel beeinflusst somit das Zusammenwirken von Lot und Grundwerkstoff entscheidend. Es zeigen sich Auswirkungen auf die Fließfähigkeit des Lots, auf die Oberflächenspannung des geschmolzenen Lots und auch auf die Fähigkeit des Grundwerkstoffs zur Benetzung. Die Verwendung von Flussmitteln bringt jedoch zahlreich Nachteile mit sich. Flussmittel enthalten giftige und umweltschädliche Substanzen und sind folglich problematisch im Einsatz. Nach dem Lötvorgang vorhandene Flussmittelrückstände müssen aufwendig entfernt werden, da diese nicht nur das Aussehen, sondern auch die Qualität der Lötnaht negativ beeinflussen, da die aggressiven Bestandteile des Flussmittels auf lang e Sicht hin Grundwerkstoff und Lotnaht angreifen und so die Anfälligkeit für Korrosion erhöhen.

Beim Hartlöten ist, wie beim Löten generell, die Zugabe von Lot eine immanente Notwendigkeit. Für die Zugabe des Lots gibt es verschiedene Möglichkeiten. Das Lot liegt drahtförmig vor und dieser Draht wird mittels einer Drahtvorschubeinrichtung kontinuierlich an die Stelle des Lötprozesses gebracht. Auch die Verwendung von Lotformteilen ist möglich. Dazu wird das zu verlötende Bauteil mit den Lotformteilen bestückt bevor diese mittels des Laserstrahls aufgeschmolzen werden und sich die Lotnaht bildet. Weiterhin ist auch die Verwendung von Lotfolien möglich, welche ebenfalls vor dem Lötprozess angebracht werden.

Die US 4 906 812 beinhaltet ein Verfahren zum Laserbearbeiten, u.a. auch zum Laserhartlöten, bei welchem zur Ableitung von Dämpfen und Rauch ein Gas, vorzugsweise ein Inertgas an der Bearbeitungsstelle vorbei geführt wird.

Trotz der zahlreichen, postiven Perspektiven des Laserstrahllötens wird diese Technik bisher wenig eingesetzt, da sich in der Praxis erheblich Probleme ergeben. So weisen die Lotnähte häufig eine Vielzahl von Poren auf, so dass die Qualität leidet und die notwendige Zug- und Druckfestigkeit nicht gegeben ist. Die vorliegenden Probleme sind dabei so gravierend, dass sie den Einsatz des Laserstrahllötens stark beeinschränken und größtenteils sogar vollständig verhindern. Problematisch ist ferner der Einsatz von Flussmitteln. Auch Vor- und Nacharbeiten sollten möglichst gering sein bzw. entfallen, um einen wirtschaftlichen Einsatz des Laserhartlötens zu ermöglichen.

Der vorliegende Erfindung liegt daher die Aufgabe zugrunde, ein Verfahren und ein Prozessgas anzugeben, welche ein qualitativ hochwertiges Laserstrahlhartlöten ermöglichen.

Die Aufgabe wird erfindungsgemäß dadurch gelöst, dass ein Prozessgasstrom auf die Lötstelle gelenkt wird, wobei im Prozessgas mindestens ein aktives Gas mit mindestens 0,01 Vol.-% und als aktives Gas Kohlendioxid, Sauerstoff, Wasserstoff oder eine Mischung aus diesen Gasen oder/und ein oder mehrere borhaltige Gase enthalten ist/sind. Das Prozessgas enthält nun erfindungsgemäß - gegensätzlich zu den rein inerten Edelgasen - mindestens ein aktives Gas. Aktive Gase im Sinne der vorliegenden Erfindung sind beispielsweise Kohlendioxid und Sauerstoff. Die aktiven Gase beeinflussen das Lot und den Grundwerkstoff. Die aktiven Gase erniedrigen die Oberflächenspannung des Lots und erhöhen die Fließfähigkeit des Lots. Das Lot wird dünnflüssiger und verläuft besser. Damit dringt das Lot leichter in den zu fügenden Spalt ein und verteilt sich dort gleichmäßig. Eine gleichförmige Verteilung des Lots ohne Aussparungen und Blasenbildung vor dem anschließenden Erstarren des Lots ist die wichtigste Grundvoraussetzung für porenfreie Lotnähte. Der Grundwerkstoff wird von den aktiven Gasen während des Lötprozesses für die Ausbildung der Lotnaht präpariert. Die aktiven Gase reagieren mit Verunreinigungen an der Oberfläche des Grundwerkstoffs. Aufgrund dieser Reinigung des Grundwerkstoffs ergibt sich eine bessere Benetzung des Grundwerkstoffs mit dem Lot. Die bessere Benetzbarkeit führt zu einer effektiven und gleichmäßigen Verteilung des Lots und unterdrückt somit das Entstehen von Poren. Des Weiteren erzeugen die aktiven Gase kleine Risse im Grundwerkstoff während des Lötprozesses an der Lötstelle, in welche das flüssige Lot eindringt. Diese durch die Risse entstehende Verklammerung von Lot und Grundwerkstoff unterstützt das Entstehen der stoffschlüssigen Verbindung, welche endgültig durch Diffusionsprozesse der beteiligten Partner entsteht. Auch aus diesem Grund erhöhen die aktiven Gasse die Qualität der Lötverbindung signifikant. Negative Einflüsse auf Grundwerkstoff oder Lot zeigen sich bei der Nutzung des erfindungsgemäßen Prozessgases nicht. Ein Teil der genannten Auswirkungen, die das erfindungsgemäße Prozessgas auf den Lötprozess ausübt, stimmen mit den Auswirkungen des Flussmittels überein. Deshalb werden die Aufgaben des Flussmittels zumindest teilweise von dem erfindungsgemäßen Prozessgas mit übernommen. Das Prozessgas kann folglich die Menge des benötigten Flussmittel reduzieren und dieses u.U. sogar vollständig ersetzen.

Die Gase und Gasmischungen gemäß der Erfindung gewährleisten die genannten Vorteile in besonderer Weise. Prinzipiell zeigen sich mit allen aktiven Gasen die genannten Vorteile, jedoch treten bei den verschiedenen Gasen unterschiedliche Effekte in den Vordergrund. Sauerstoff beispielsweise erhöht insbesondere die Fließgeschwindigkeit des Lots und erniedrigt die Oberflächenspannung des Lots besonders effektiv, während Wasserstoff v.a. mit den Oxiden an der Oberfläche des Grundwerkstoffs reagiert und diese entfernt. Kohlendioxid wirkt ähnlich wie Sauerstoff, jedoch ist der Einfluss auf das Lot geringer. Stickstoff wirkt als aktives Gas und beeinflusst insbeso n-dere den Grundwerkstoff. Welches bzw. welche aktive Gase für den speziellen Anwendungsfall am besten geeignet sind, kann der Fachmann durch einfache Ausprobieren herausfinden. Andere aktive Gase können ebenfalls im Sinne der Erfindung eingesetzt werden. Dazu zu nennen sind Stickstoffmonoxid, Distickstoffmonoxid, Flourkohlenwasserstoffe und chlorierte Flourkohlenwasserstoffe sowie CF₄ und SF₆.

In vorteilhafter Ausgestaltung sind Kohlendioxid, Sauerstoff und/oder Wasserstoff in dem Prozessgas mit 0,01 Vol.-% bis 30 Vol.-%, vorzugsweise 0,1 Vol.-% bis 20 Vol.-%, besonders bevorzugt 1 Vol.-% bis 10 Vol.-% enthalten. In diesen Volumenanteilen ist einerseits die Wirkung der aktiven Gase sichergestellt und anderseits kommt es nicht zu schädlichen Veränderungen in Grundwerkstoff oder Lot. Für den Wasserstoffanteil liegt die zu bevorzugende Obergrenze aufgrund seiner Explosivität bereits bei 20 Vol.-%.

In einer alternativen vorteilhaften Ausgestaltung ist als aktives Gas mindestens 35 Vol.-%, vorzugsweise mindestens 50 Vol.-% Kohlendioxid enthalten. Hohe Volumenanteile an Kohlendioxid im Prozessgas führen zu einer außerordentlich effektiven und sehr gut beherrschbaren Energieeinkopplung. Dies führt zur schnellen Verflüssigung des Lots, während hingegen der Grundwerkstoff nur in geringen Maße erwärmt wird. Möglicherweise basiert dies auf dem Dipolcharakter des Kohlendioxid-Moleküls im Prozessgas. Diese spezielle und zusätzliche Wirkungsweise von Kohlendioxid zeigt sich erst bei Volumenanteilen von mehr als 35 % und deutlicher ist sie bei Volumenanteilen von über 50 % zu bemerken. Bei Kohlendioxid sind auch bei solch hohen Volumenanteilen keine negativen Folgen für Grundwerkstoff oder Lot zu bemerken.

In Weiterbildung besteht das Prozessgas aus einem binären Gasgemisch aus Kohlendioxid und Sauerstoff oder Kohlendioxid und Stickstoff oder Kohlendioxid und Argon. Durch das Mischen des Kohlendioxids mit einem dieser Gase entstehen binäre Prozessgase mit hervorragenden Eigenschaften. In speziellen Anwendungsfällen kommen jedoch besser ternäre Mischungen aus diesen Gasen oder gar die quaternäre Mischung aus allen vier Gaskomponenten zum Einsatz.

Ferner kann das Prozessgas gemäß der Erfindung ein borhaltiges Gas oder mehrere borhaltige Gase enthalten. Durch die Zugabe einer oder verschiedener Borverbindungen, beispielsweise von Borestem, wird die Oberfläche des Grundwerkstoffs besonders gut vorbereitet. Die Oberfläche wird von Verunreinigungen befreit und die Wechselwirkung der Oberfläche mit dem geschmolzenen Lot wird optimiert. Das daraus resultierende gute Verlaufen des Lots unterdrückt die Porenbildung nahezu vollständig. Die überschüssigen Borverbindungen und auch die an der Oberfläche entstehenden Produkte entweichen mit dem verbrauchten Prozessgas in die Umgebung. Die borhaltigen Gase dienen als ein Art Flussmittel und sind deshalb geeignet die Flussmittel zumindest teilweise, oft aber auch vollständig zu ersetzen. Ein aufwändiges Nacharbeiten, mit welchem das überschüssige Flussmittel nach dem Lötprozess wieder entfernt wird, entfällt deshalb.

Mit besonderem Vorteil ist das borhaltige Gas dabei in einem Anteil von 0,01 Vol.-% bis 3 Vol.-%, vorzugsweise 0,1 Vol.-% bis 1,5 Vol.-% enthalten. In diesen Anteilen ist einerseits die Wechselwirkung mit dem Grundwerkstoff und anderseits die Verflüchtigung gewährleistet.

Prinzipiell ist die Verwendung des erfindungsgemäßen Prozessgases für alle Lotformen geeignet. Besonders vorteilhaft ist das erfindungsgemäße Prozessgas jedoch bei der Verwendung von drahtförmigen Lot.

In einer vorteilhaften Ausgestaltung des erfindungsgemäßen Verfahrens wird flussmittelfrei gelötet. Damit entfällt das arbeitsintensive Nacharbeiten der Lotnaht zum Entfernen von Flussmittelresten. Weiterhin ist es von Vorteil, das diese umweltschädlichen und giftigen Substanzen nicht mehr verwendet werden müssen. Auch nachträgliche Veränderungen der Lötverbindung aufgrund des Einwirken des Flussmittels auf Lot und/oder Grundwerkstoff entfallen.

Das erfindungsgemäße Prozessgas eignet sich mit besonderen Vorteilen zum Fügen von beschichtete Werkstoffen, insbesondere zum Fügen von verzinkten Stählen. Des Weiteren eignet sich das erfindungsgemäße Prozessgas auch für Aluminium und Aluminiumlegierungen.

Aber auch beim Fügen von heterogen Werkstoffverbindungen zeigt das erfindungsgemäße Prozessgas seine Vorteile. Die gefügten Hartlotverbindungen zeigen trotz der unterschiedlichen Materialeigenschaften, wie unterschiedliche Wärmeleitungskoeffizienten und verschiedene Wärmekapazitäten eine hervorragende Qualität. So wird mit dem erfindungsgemäßen Prozessgas beispielsweise das Fügen von Aluminium und Aluminiumlegierungen mit (verzinkten) Stählen oder das Fügen von unterschiedlichen Aluminiumlegierungen ermöglicht.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: das Verfahren zum Laserstrahlhartlöten mit einem mittels einer Düse auf die Bauteile gerichteten Prozessgasstrom und
- Figur 2: das Verfahren mit drahtförmiger Lotzugabe.

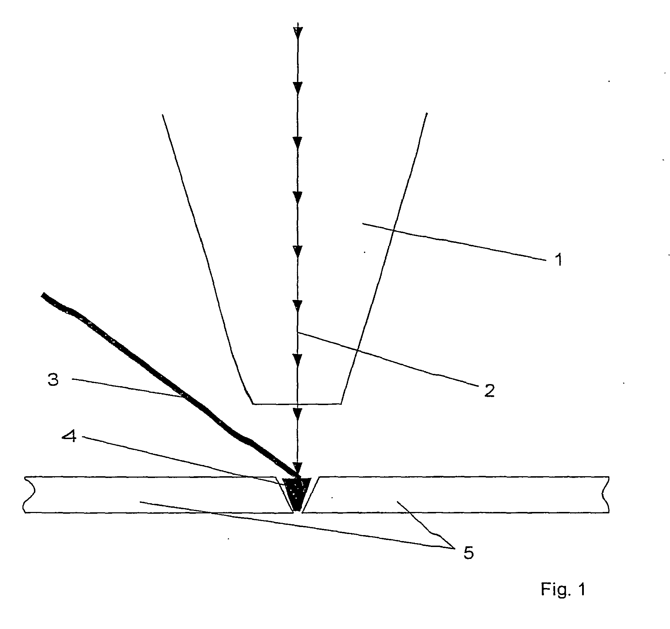

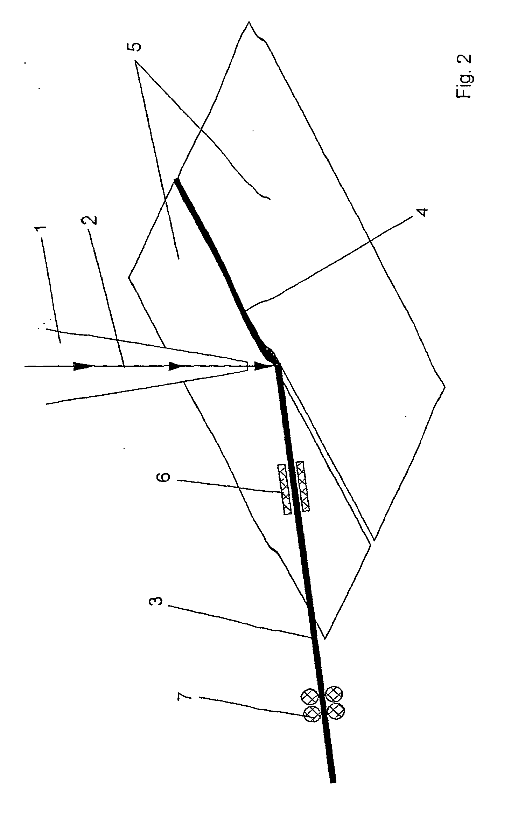

Figur 1 und 2 zeigen eine Prozessgasdüse 1, einen Laserstrahl 2, einen Lotdraht 3, eine Lotnaht 4 und zu verlötende Bauteile 5. Des Weiteren zeigt Figur 2 eine Drahtlenkeinrichtung 6 und eine Drahtvorschubeinrichtung 7.

In dem Ausführungsbeispiel gemäß Figur 1 wird eine Fuge mit dem Laserstahl hartgelötet. Dazu sind die Bauteile 5 so angeordnet, dass sich eine V-förmige Fuge ergibt. Der Laserstahl 2 wird auf die Oberseite der Bauteil fokussiert und verflüssigt das drahtförmig zugegebene Lot 3. Sollte der Brennfleck zu klein oder die Energiedichte im Brennfleck zu hoch sein, muss ein defokussierter Laserstrahl verwendet werden. Der Fokus des Lasers liegt dann vorzugsweise oberhalb des Bauteil s. Das Lot 3 verflüssigt sich an der Lötstelle durch die Energie des Laserstrahls 2. Hinter der Lötstelle erstarrt das Lot und die Lotnaht 4 bildet sich aus. Vorteilhafterweise wird das Lot in einem Winkel von 15° bis 45° dem Lötprozess zugeführt. Der Prozessgasstrom wird mittels der Prozessgasdüse 1 auf die Lötstelle gelenkt. Der Prozessgasstrom ummantelt dabei den Laserstrahl. Als Quelle für den Laserstrahl dient vorzugsweise ein Diodenlaser, aber auch ein Festkörperlaser (beispielsweise ein Nd:YAG Laser) oder ein CO₂-Laser wird eingesetzt. Die Einkopplung des Laserstrahls in die Prozes sgasdüse wird durch den Lasertyp bestimmt. Bei Verwendung eines Diodenlasers wird dieser vorzugsweise direkt mit der Prozessgasdüse verbunden sein. Wird hingegen eine Glasfaser für den Transport der Laserstrahlung in die Prozessgasdüse verwendet, endet die Faser vorteilhafterweise in oder nahe an der Prozessgasdüse. Die Prozessgasdüse 1 sorgt für das Strömen des Prozessgases an die Lötstelle. Als Prozessgas wird mit besonderem Vorteil eine Mischung aus 3 Vol.-% Sau erstoff und 97 Vol.-% Argon verwendet. Diese Gasmischung eignet sich insbesondere zum Fügen von verzinkten Stählen. Die Komponenten des Prozessgases werden vorzugsweise als Gasmischung in die Prozessgasdüse geführt. Es ist jedoch auch möglich, die Komponenten in der Prozessgasdüse zu verwirbeln. Die Lotnähte sind frei von Spritzern und Unregelmäßigkeiten, so dass ein Nacharbeiten nicht notwendig ist.

Figur 2 zeigt eine vorteilhaft Ausgestaltung für die Verwendung von drahtförmigen Lot. Der Lotdraht 3 wird von der Drahtvorschubein richtung 7 kontinuierlich gefördert und von der Drahtlenkeinrichtung 6 an die Bearbeitungsstelle geführt. Dort schmilzt der Lotdraht 3 im Laserstrahl 2 und bildet nach Erstarrung die Lotnaht 4. Das Prozessgas wird mit der Prozessgasdüse 1 an die Lötstelle geführt und wechselwirkt dort mit dem geschmolzenen Lot und dem Grundwerkstoff. Die Bauteile 5 bestehen in einer Ausgestaltung aus unterschiedlichen Materialien. Die Lotnaht 4 entsteht so beispielsweise zwischen einem Aluminium- und einem Stahlbauteil. Als Prozessgas wird vorteilhafterweise eine Mischung aus 85 Vol.-% Kohlendioxid und 15 Vol.-% Argon verwendet.

## Patentansprüche

1. Verfahren zum Laserstrahlhartlöten mit einem auf eine Lötstelle oder in die Nähe der Lötstelle fokussierten Laserstrahl, wobei das Lot an der Lötstelle von dem Laserstrahl aufgeschmolzen wird, **dadurch gekennzeichnet, dass** ein Prozessgasstrom auf die Lötstelle gelenkt wird, wobei im Prozessgas mindestens ein aktives Gas mit mindestens 0,01 Vol.-% und als aktives Gas Kohlendioxid, Sauerstoff, Wasserstoff oder eine Mischung aus diesen Gasen oder/und ein oder mehrere borhaltige Gase enthalten ist/sind.

2. Verfahren nach Anspruch 1, **dadurch gekennzeichnet, dass** 0,01 Vol.-% bis 30 Vol.-%, vorzugsweise 0,1 Vol.-% bis 20 Vol.-%, besonders bevorzugt 1 Vol.-% bis 10 Vol.-% Kohlendioxid, Sauerstoff und/oder Wasserstoff enthalten sind.

3. Verfahren nach Anspruch 1, dass als aktives Gas mindestens 35 Vol.-%, vorzugsweise mindestens 50 Vol.-% Kohlendioxid enthalten ist.

4. Verfahren nach Anspruch 3, **dadurch gekennzeichnet, dass** das Prozessgas aus einem binären Gasgemisch aus Kohlendioxid und Sauerstoff/Stickstoff/Argon besteht.

5. Verfahren nach einem der Ansprüche 1 bis 4, **dadurch gekennzeichnet, dass** 0,01 Vol.-% bis 3 Vol.-%, vorzugsweise 0,1 Vol.-% bis 1,5 Vol.-% borhaltiges Gas enthalten ist.

6. Verfahren nach einem der Ansprüche 1 bis 5, **dadurch gekennzeichnet, dass** flussmittelfrei gelötet wird.

7. Verfahren nach einem der Ansprüche 1 bis 6, **dadurch gekennzeichnet, dass** beschichtete Werkstoffen, insbesondere verzinkte Stähle gefügt werden.

8. Verfahren nach einem der Ansprüche 1 bis 6, **dadurch gekennzeichnet, dass** heteroge Werkstoffverbindungen gefügt werden.

## Claims

1. Method for laser brazing with a laser beam focussed on a brazing point or near the brazing point, the solder being melted at the brazing point by the laser beam, **characterized in that** a stream of process gas is directed onto the brazing point, at least one active gas being contained in the process gas in at least 0.01% by volume, and carbon dioxide, oxygen, hydrogen, or a mixture of these gases being contained as the active gas.

2. Method according to Claim 1, **characterized in that** 0.01% by volume to 30% by volume, preferably 0.1% by volume to 20% by volume, with particular preference 1% by volume to 10% by volume, of carbon dioxide, oxygen and/or hydrogen is contained.

3. Method according to Claim 1, **characterized in that** at least 35% by volume, preferably at least 50% by volume, of carbon dioxide is contained as the active gas.

4. Method according to Claim 3, **characterized in that** the process gas comprises a binary gas mixture of carbon dioxide and oxygen/nitrogen/argon.

5. Method according to one of Claims 1 to 4, **characterized in that** 0.01% by volume to 3% by volume, preferably 0.1% by volume to 1.5% by volume, of boron-containing gas is contained.

6. Method according to one of Claims 1 to 5, **characterized in that** brazing is carried out without any flux.

7. Method according to one of Claims 1 to 6, **characterized in that** coated materials, in particular galvanized steels, are joined.

8. Method according to one of Claims 1 to 6, **characterized in that** heterogeneous material combinations are joined.

## Revendications

1. Procédé de brasage fort au faisceau laser à l'aide d'un faisceau laser concentré sur un emplacement de brasage ou à proximité de l'emplacement de brasage, la brasure étant fondue par le faisceau laser à l'emplacement de brasage, **caractérisé en ce qu'**un écoulement de gaz de processus est dévié sur l'emplacement de brasage, le gaz de processus contenant au moins un gaz actif à au moins 0,01 % en volume et comme gaz actif le dioxyde de carbone, l'oxygène, l'hydrogène ou un mélange de ces gaz, et/ou un ou plusieurs gaz qui contiennent du bore.

2. Procédé selon la revendication 1, **caractérisé en ce que** le gaz de processus contient de 0,01 % en volume à 30 % en volume, de préférence de 0,1 % en volume à 20 % en volume et de façon particulièrement préférable de 1 % en volume à 10 % en volume de dioxyde de carbone, d'oxygène et/ou d'hydrogène.

3. Procédé selon la revendication 1, qui contient comme gaz actif au moins 35 % en volume et de préférence au moins 50 % en volume de dioxyde de carbone.

4. Procédé selon la revendication 3, **caractérisé en ce que** le gaz de processus est constitué d'un mélange binaire de gaz, à savoir le dioxyde de carbone et l'oxygène, l'azote ou l'argon.

5. Procédé selon l'une des revendications 1 à 4, **caractérisé en ce que** le gaz de processus contient de 0,01 % en volume à 3 % en volume et de préférence de 0,1 % en volume à 1,5 % en volume d'un gaz qui contient du bore.

6. Procédé selon l'une des revendications 1 à 5, **caractérisé en ce que** l'on y brase sans fondant.

7. Procédé selon l'une des revendications 1 à 6, **caractérisé en ce que** l'on y joint des matériaux revêtus et en particulier des aciers galvanisés.

8. Procédé selon l'une des revendications 1 à 6, **caractérisé en ce que** l'on y rejoint des matériaux de compositions différentes.
